# EUROPEAN PATENT APPLICATION

(11) **EP 2 789 438 A1**
(43) Date of publication of application: **15.10.2014**
(21) Application number: 13001788.2
(22) Date of filing: 08.04.2013
(51) Int. Cl.: B27N 1/02

(54) **Method and apparatus for the production of a particle based element with inclined injection of a modification substance**

(71) Applicant: BASF SE, 67056 Ludwigshafen (DE)
(72) Inventor: Joscák, Matus, 96001 Zvolen (SK); Joscak, Tomas, A-1190 Wien (AT); Schmidberger, Clemens, 4061 Pasching (AT); Lopez, Alejandro Martinez-Conde, 13005 Ciudad Real (ES); Weinkötz, Stephan, 67434 Neustadt (DE); Assmann, Jens, 67435 Neustadt-Koenigsbach (DE); Schade, Matthias, 67063 Ludwigshafen (DE)
(74) Representative: Féaux de Lacroix, Stefan

(57) **Abstract**

The present invention relates to a method for the production of a particle based element, in particular a particle board or fiber board, wherein particles (2) are dispersed in a dispersing section (5) to form a particle mass (15), and a modification substance (13) is provided modifying the properties of the particle mass (15), such that particles (2) with accordingly modified properties are arranged in at least one predetermined region of the particle mass (15). The modification substance (13) is injected into the particles (2) before the particles (2) form the particle mass (15), wherein the modification substance (13) is injected into the particles (2) in an injection direction, which is inclined with respect to the flow direction (200) of the particle stream at the injection location. The invention further relates to an apparatus (1) for the production of a particle based element, a particle based element, and a further method for the production of a particle based element.

## Description

The present invention relates to a method and an apparatus for the production of a particle based element, in particular a particle board or fiber board, as defined in the preambles of the respective independent claims.

DE 103 15 922 A1 discloses the production of particle boards, wherein spray tubes are arranged in between or in the region of falling particle streams in a dispersing section of the particle board production apparatus, where the particle mass is formed by dispersing particles. The spraying tubes provide water containing treatment medium to the particles, wherein the arrangement of the spraying tubes in between the particle streams allows that the treatment medium can be provided inside the particle mass.

However, according to this teaching, the treatment medium is only provided in a thin layer of the particle mass.

It is the object of the present invention to provide a better distribution of a modification substance in a particle mass during manufacture of a particle based element.

The invention provides a method for the production of a particle based element, in particular a particle board or fiber board, comprising the steps of dispersing particles in a dispersing section to form a particle mass, and providing a modification substance modifying the properties of the particle mass, such that particles with accordingly modified properties are arranged in at least one predetermined region of the particle mass, wherein the modification substance is injected into the particles before the particles form the particle mass, and wherein the modification substance is injected into the particles in an injection direction, which is inclined towards the flow direction of the particle stream at the injection location.

This provides the effect that modification substance is not only sprayed onto the particle mass, but is rather injected in between the falling particles, such that a larger amount of particles is in contact with the modification substance. In particular, the inclined injection enables that a gradient regarding the concentration of the modification substance in the particle mass can be obtained. Thus, the properties of a great amount of particles in the particle mass can be modified, and in particular a smooth transition in between the modified areas of the particle mass and the unmodified areas of the particle mass can be obtained due to the concentration gradient of the modification substance.

The particles forming the particle mass are preferably in the form of fibers. In particular, the particles are wood chips or other natural fibers. However, it is also possible to use plastic chips or fibers, as well glass or stone fibers or different types of particles prepared within chemical processes e.g. polyurethane or polystyrene based particles. Preferably, the particle based element is in the form of a board.

The modification substance is usually injected in a generally fan-shaped or conically shaped form, comparable with a spray cone of a spraying can. The injection direction of the modification substance is in particular to be understood as the central axis of the spray cone or spray wedge or as the average direction of the individual trajectories of the modification substance immediately before entering the particle mass.

Preferably, the inclination angle of the injection direction with respect to the flow direction of the particle stream is at least 10 degrees and preferably more than 45 degrees. In particular, the injection direction is a vector, which comprises a component which is perpendicular to the flow direction of the particle stream and directed towards the particle stream at the injection location, and a component which is parallel to the flow direction of the particle stream. The parallel component of the vector may be directed in the same direction as the flow direction of the particle stream or in the opposite direction. If it is directed in the same direction, a smoother injection may be obtained with less diversion of the falling particles. If it is directed in the opposite direction a more thorough mixing of the particles and modification substance may be obtained.

In a preferred embodiment, the modification substance is injected in an injection direction substantially perpendicular to the flow direction of the particle stream at the injection location. This enables a deep injection of the modification substance and thus, a beneficial distribution of the modification substance.

In one embodiment, the modification substance is a treatment fluid. The treatment fluid may in particular be water. Some possible other treatment fluids are adhesive, resin, steam, chemical additives, hardener for two or several component adhesives or catalysts. The treatment fluid modifies in particular the properties of particle mass. The modification may relate to the interaction of the particles or to inherent properties of the particles. For example, the treatment fluid may change the compressive properties of the particles, i.e. that the particles show a higher or lower compressibility when being subjected to pressure.

In one embodiment, the modification substance is adhesive. The adhesive may be provided as a fluid, but also as a solid, meltable adhesive, which is only activated in a heating and compressing step. This adhesive could be also activated with a time-set chemical reaction. In particular, the time-set chemical reaction is adapted to harden the adhesive in between 20 seconds and 220 seconds after application, more preferably in between 40 seconds and 200 seconds after application. This value is chosen in dependency of the distance in between the dispersion means and a press for compressing the particle mass and the conveying speed of the particle mass in between the dispersion means and the press. The localized application of adhesive as possible with the inventive method enables to strengthen certain parts of the particle based element, while reducing the amount of necessary adhesive, which is beneficial regarding the production costs and ecological aspects of the particle based element.

In one embodiment, the modification substance is a hardener or catalyst. In particular, the hardener or catalyst interacts with adhesive, which has been previously applied to the particles. The hardener or catalyst may increase the speed of the hardening process of the modified area and shorten the production time as well as increase the mechanical or physical properties, in particular strength, of the final particle based element.

In another embodiment, the modification substance is a further type of particles with different properties than the other particles provided in the particle mass. Thus, when injecting the modification substance, further particles are injected in a stream of other particles, such that the particles are at least partially mixed. The mixing of the particles is beneficial in contrast to the relatively discrete arrangement of particles in different layers next to each other as known in the prior art. The further type of particles may be particles of a different size, material or properties than the other particles. For example, the further type of particles may be wood chips of a smaller or larger size, but also artificially produced particles, which may modify the properties of adjacent particles, in particular by chemical reactions.

In one embodiment, the modification substance is injected while the particles are falling from a dispersion means onto a support. The support is in particular a conveyor, such as a conveyor belt. Alternatively, the support may be a stationary plate or mold. In particular, the dispersion means is adapted to distribute the particles, such that they fall onto the support to form a particle mass on the support. Preferably, this distribution is equal. The particle mass on the support is subsequently preferably compressed and/or heated such that the particles bond with each other and a rigid particle based element is formed.

In one embodiment, the modification substance is injected at least 20 millimeters (mm) into the falling particles in the injection direction. Thus, in the falling particles in a depth of at least 20 mm, a gradient regarding the amount of modification substance with respect to the dispersed particles is formed. In other embodiments, the modification substance is injected at least 100 mm into the falling particles in the injection direction.

After the particles have formed the particle mass by being arranged on each other on the support, the modification substance injected at one injection location is present in at least 6% of the height of the particle mass. Preferably, the modification substance injected at one injection location is distributed in less than 50%, more preferably less than 25%, of the height of the particle mass. An injection at two injection locations may thus cover 100% of the height of the particle mass.

In case the modification substance is injected at several injection locations, such as opposite injection locations, the modification substance is preferably present in up to 50% of the height of the particle mass.

The particle mass is usually compressed after being arranged on the support, wherein the coefficient of compression is usually around 1:8 to 1:12, preferably 1:10 for a fiber board, and 1:2 to 1:5, preferably 1:3 to 1:4, for a wood chip board. A compression coefficient of around 1:10, indicates that the height of the particle mass is reduced ten times during compression, wherein the density is increased about ten times.

Preferably, the modification substance is injected from the side into the falling particles. In particular, an injection means is provided adjacent to a particle stream of particles falling onto the support such that the particles do not come into contact with the injection means but that the injection means can inject the modification substance directly into the particle stream. In another embodiment, the injection means may be arranged in the particle stream of falling particles, such that it splits the particle stream, wherein modification substance may be injected from one or several sides into the falling particles.

In another embodiment, the modification substance is injected while the particles are conveyed to a dispersion means from which the particles fall onto a support. Thus, the modification substance is injected upstream of the dispersion means. The stream of particles upstream of the dispersion means is substantially laminar, i.e. the particles are not substantially mixed during conveying. Thus, the modification substance remains in a well defined area of the conveyed particle mass, until it reaches the dispersion means and during dispersion, such that the desired distribution of the modification substance in the particle mass on the support can be attained. Again, the support is in particular a conveyor, preferably a conveyor belt, but may as well be a plate or mold.

In one embodiment, the modification substance is injected into the falling particles, such that the trajectories of falling particles obtain an additional horizontal component and an improved mixing of the falling particles and the modification substance is attained.

The invention further provides an apparatus for the production of a particle based element, in particular a particle board or fiber board, comprising a dispersion means adapted to distribute the particles in a dispersing section, a support arranged below the dispersion means such that a particle mass is formed on the support by particles falling from the dispersion means onto to the support, and an injection means providing a modification substance to the particles, wherein the injection means is arranged above the upper edge of the particle mass on the support, wherein the injection means comprises a nozzle defining a main injection direction for the modification substance to the particles, which is inclined with respect to the flow direction of the particle stream at the injection location. In particular, the main injection direction is defined by a vector, which has at least one component which is directed towards the particle stream and perpendicular to the flow direction of the particle stream at the injection location, while the other component of the vector may be directed either parallel or opposite the flow direction of the particle stream.

Preferably, the injection means is arranged such that the particles pass at both sides of the injection means, and the injection means comprise at least two nozzles, provided at opposite sides of the injection means, each injecting the modification substance to the respective portions of the particles passing the respective sides of the injection means. In particular, the injection means may comprise several tools being arranged in a spaced relationship substantially in a horizontal direction in the dispersing section above the upper part of the particle mass.

Preferably, the injection means are adapted such that the particles flow around the tools before reaching the upper part of the particle mass.

The particles may be treated by the injection means, such that they have different properties than the particles which are not treated by the injection means. In particular, treatment may be gradual, depending on the amount of modification substance which is provided to the respective particles.

Each of the tools may be adapted to provide modification substance at predetermined time intervals, such that a predetermined pattern of treated particles in the particles is created. In particular, the treatment may be provided at predetermined discrete points in time, while continuously dispersing the particles to form the particle mass. The treatment may be effected at predefined discrete locations in the particle mass. While the particle mass is moving with respect to the tools, different areas of the particle stream may be provided with modification substance such that the predetermined pattern of modified particles with respect to the other particles in the particle mass can be created.

Preferably, a press is provided downstream of the dispersing section, which is adapted to compress and bond the particle mass to form a particle based element. The compression of the particle mass is in particular carried out with a compression ratio of in between 1:12 to 1:2 as already specified above in more detail. Preferably, the tool or at least one of the tools of the injection means has a convex upper side facing the flow of particles in the dispersing section. In some embodiments, the upper sides of the at least one tool adjacent to an upper edge of the tool have an acute angle with respect to each other at the upper edge.

Preferably, the tools are arranged in a spaced relationship substantially in the conveying direction of the particle mass on the support above the upper part of the particle mass in the dispersing section. The tools may be arranged at different heights. However, preferably the tools are arranged at the same height. In particular, the at least one tool has at least one nozzle arranged at its side.

In some embodiments, the nozzle of the injection means may be a particle provision device, which allows providing particles with different properties. However, in other embodiments, the nozzle is adapted to supply a treatment fluid as a modification substance.

In particular, the modified particles may be arranged in a wavelike form, zigzag form, in one or more, in particular 2, 3, 4, 5 or 6 parallel layers, which may be adjacent or in a distance to each other. Further, the modified particles may be arranged only locally in the aforementioned shapes, while the remaining particle mass is not modified.

The invention further relates to a particle based element, manufactured by a method according to the invention or by an apparatus according to the invention as specified above.

Preferably, the modification substance is provided in a layer of the particles mass, which has a height of about 6% to 100% of the height of the layer. A height of 100% is particularly obtained by providing an injection means with two tools, which each inject modification substance to about 50% of the particle mass.

Preferably, the concentration of the modification substance is distributed according to a continuous gradient in the layer. In particular, the distribution of the modification substance in the layer decreases approximately according to a degree 2 polynomial, i.e. a parabola, according to the function C=a(z-h)+b(z-h)², wherein C is the concentration, z is the height direction coordinate of the particle mass, h is the location of the highest concentration of the modification substance, and a and b are the coefficients defining the polynomial.

Thus, the continuous gradient can be approximated either linear, in case b=0, or quadratic.

The invention further relates to the method for the production of a particle based element, in particular a particle board or fiber board, comprising the steps of dispersing the particles in a dispersing section to form a particle mass, and locally injecting a modification substance, such that particles with accordingly modified properties are arranged in at least one predetermined region of the particle mass, wherein the modification substance is adhesive and is injected before the particles form the particle mass.

The distribution of adhesive before the particles are arranged on the support where they form a particle mass, and in particular during the dispersing of the particles is beneficial, as in the falling particle stream there are relatively large intervals in between the particles, such that the adhesive may be sprayed and distributed over a larger area within the falling particles, which leads to a better distribution of the adhesive in the particle mass. Thus, a distribution of the adhesive according to a gradient can be obtained in the particle mass, which greatly improves the stability of a particle board formed from the particle mass.

In the following, the invention will be described by means of exemplary embodiments, which are shown in the following figures:
Figure 1 shows a schematic side view of an apparatus according to a first embodiment of the invention.
Figure 2 shows a schematic side view of an alternative injection means, which can be used in the apparatus according to the first embodiment as shown in Figure 1.
Figure 3 shows a schematic side view of an apparatus according to a second embodiment of the invention.
Figure 4 shows a schematic side view of an apparatus according to a third embodiment of the invention.
Figure 5 shows a schematic side view of an apparatus according to a fourth embodiment of the invention.
Figure 6 shows a schematic side view of an apparatus according to a fifth embodiment of the invention.
Figure 7 shows a schematic side view of an apparatus according to a sixth embodiment of the invention.

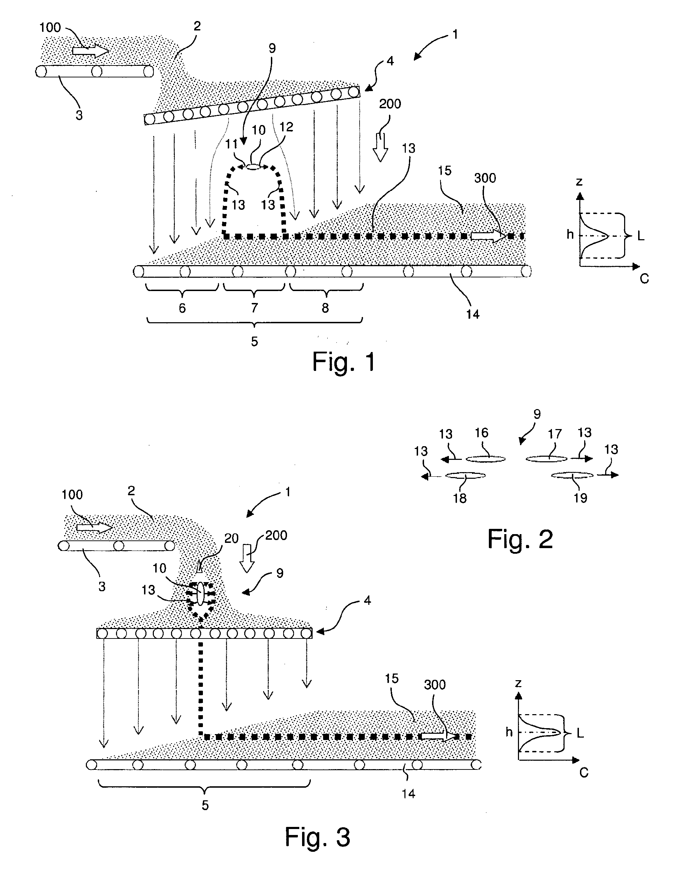

In Figure 1, an apparatus according to the invention is shown in a schematic side view. The apparatus enables to conduct an embodiment of the method for the production of a particle based element according to the invention. Initially, particles 2 are conveyed on a conveying means 3, in particular in the form of a conveyor belt, in a conveying direction 100 to a dispersion means 4 distributing the particles in a dispersing section 5. The initially conveyed particles 2 may already be provided with adhesive, to enable the later hardening to a particle based element comprising these particles 2. In the embodiment according to Figure 1, the dispersing section 5 is divided in different subsections 6, 7, 8 wherein in the outer subsections 6 and 8 the particles are substantially evenly distributed by the dispersion means 4 and, wherein in the central subsection 7 slightly fewer particles are distributed. In some embodiments, no particles may be dispersed in the central subsection 7. The particles 2 fall due to gravity from the dispersion means in a particle stream in the flow direction 200.

An injection means 9 is arranged in the central subsection 7, wherein the injection means 9 comprises a tool 10 with nozzles 11 and 12 at opposite sides thereof. The nozzles 11, 12 are directed from the tool 10 towards the stream of falling particles in the subsections 6 and 8. Thus, the main injection direction defined by the nozzles 11, 12 is substantially horizontal and perpendicular to the side of the falling particles to which the respective nozzles 11, 12 are directed. However, the main injection direction may also be inclined with respect to the perpendicular direction towards the side of the falling particles. The injection means 9 provides through each of the nozzles 11, 12 the modification substance, which may be in the form of additional particles having different properties than the particles 2 provided by the dispersion means 4, or may be a treatment fluid, such as water or adhesive. The area of the particles next to the injection means in particular next to the nozzles is the injection location.

As can be seen in Figure 1, the injection of the modification substance 13 by means of the injection means 9 affects the trajectories of the falling particles, which are slightly diverted in the direction of the injection. Further, the falling particles affect the trajectories of the injected modification substance, such that the modification substance travels together with the particles at some point after injection. This enables that the particles 2 and the modification substance 13 are mixed before they reach a support 14, such that when they form together the particle mass 15 on the support 14 a desired distribution of the modification substance 13 in the particles 2 is obtained.

As shown in Figure 1, the particles 2 fall together with the modification substance 13 onto a support 14, which is in the form of a conveyor belt. Substantially centrally inside the particle mass 15 on the support 14, the highest concentration of modification substance 13 is present. In the dispersing section 5, the particles are falling in a flow direction 200, which is substantially vertical.

The distribution of the concentration of the modification substance 13 in the particle mass 15 is shown in the diagram on the right hand side of Figure 1, wherein a peak of the concentration C of the modification substance 13 is present in the middle of the particle mass 15, i.e. at z=h, while the concentration gradually declines towards the top and towards the bottom of the particle mass 15, while only being present in an inner layer L. Thus, each of the nozzles 11, 12 of the injections means 9 provides modification substance to one side of the layer as seen from z = h, and, thus, to a layer of the height L/2. The particle mass 15 is then further conveyed in the conveying direction 300 until is reaches a press, in which the particle mass 15 is compressed and bonded to form a particle board.

Preferably, the injection means 9 extends linear in the normal direction of the drawing plane, wherein several discrete nozzles or one or several long slit-like nozzles may be provided along its extension. This applies for all injection means discussed in the following.

In Figure 2, an alternative injection means for the use in an embodiment as shown in Figure 1 is illustrated here. The injecting means 9 according to Figure 2 comprises four tools 16, 17, 18 and 19. The tools 16 and 17 are arranged at the same height and at a horizontal distance from each other, while the tools 18 and 19 are arranged below the tools 16, 17 and in a greater distance to each other than the tools 16, 17. Thus, when the falling particles pass the tools 16, 17, the modification substance 13 is injected into the falling particles and, therefore, slightly diverts the fallen particles in the injection direction. Tools 18 and 19 are arranged in manner, such that they are provided at the optimal position regarding the diverted falling particles. In particular, all tools are arranged, such that they are closely adjacent to the side of the particles falling next to them. In particular, the tools may be directly adjacent or in a distance of less than 10 mm, 50 mm, 100 mm, or 200 mm to the side of a respective particle stream depending on the width of the particle stream.

The injection means 9 according to Figure 2 allows injecting a greater amount of modification substance into the falling particles 2.

The subsequently arranged tools 16, 18, respectively tools 17, 19 may each provide a different modification substance. For example the upstream tools 16, 17 may provide adhesive, and the downstream tools 18, 19 may provide hardener for this adhesive.

In Figure 3 an apparatus 1 according to a second embodiment of the invention is shown, which allows operating a method according to an embodiment of the invention. Again, particles 2 are conveyed in a conveying direction 100 on a conveying means 3, however, in the second embodiment, the injection means 9 is arranged upstream and above the dispersion means 4. The injection means 9 comprises a tool 10, which is adapted to inject modification substance 30 to both of its sides. The tool 10 has in particular an elongated form with a convex upper side, to facilitate the flow of the particles 2 in the flow direction 200 around the tool. Several nozzles are provided on the tool 10 along its elongated form in the flow direction 200. Above and upstream of the tool 10, a particle division means 20 is arranged, which allows opening up the particle stream, such that it flows around the tool 10. In particular, the particle stream is more dense upstream of the dispersion means, as the particles have not yet been distributed. Thus, the injection of modification substance upstream of the particle dispersion means is more local, as it cannot be injected as deep into the stream of passing particles as in the particle dispersing section 5. Thus, this embodiment allows obtaining a higher concentration of modification substance centrally in the particle mass. Nevertheless, due to the conveying and dispersing of the particles 2 downstream of the injection means 9, the modification substance 13 is beneficially distributed. Again, the particles 2 are dispersed by the dispersion means 4 in the dispersing section 5, and fall from the dispersion means 4 onto the support 14 to form a particle mass 15., The dispersion means 4 comprises in particular various rollers, which distribute the particles 2 before the particles 2 fall from the dispersion means 4 onto the support 14.

In particular, the dispersion means 4 distributes the particles sufficiently equal, that the relative distribution of the modification substance 13 in the particles 2 is generally maintained when particles pass the dispersion means 4.

The distribution of the modification substance 13 in the particle mass 15 is shown in the diagram on the right hand side, wherein the more concentrated distribution and, thus, the smaller height of the layer L can be seen.

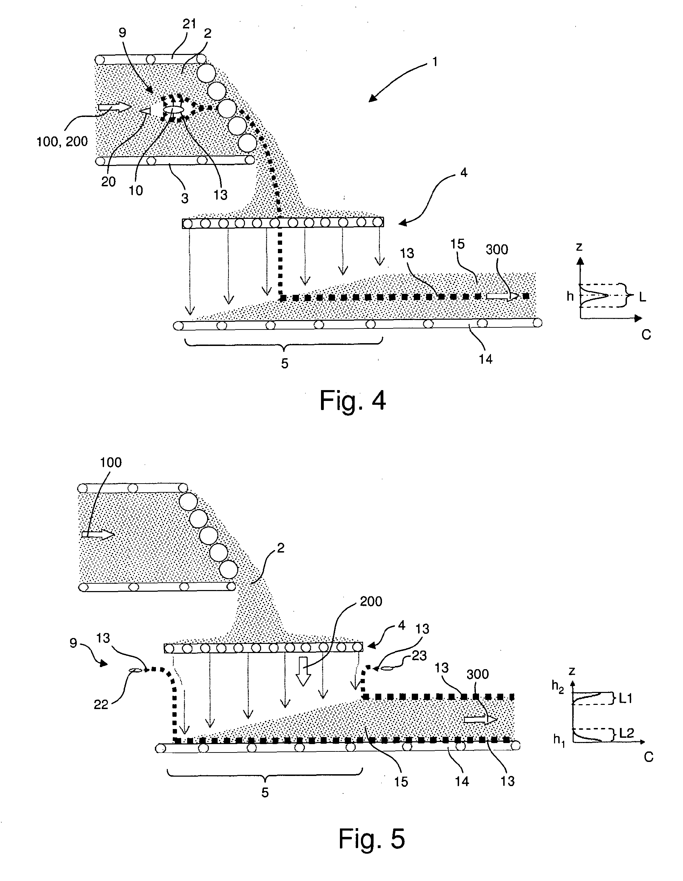

In Figure 4, a further embodiment of an apparatus according to the invention is shown. In this embodiment, the injection means 9 is arranged even more upstream than in Figure 3. In particular, the injection means 9 is provided in the particles 2, which are still conveyed on the conveying means 3. Thus, the conveying direction 100 corresponds to the flow direction 200 of the particles 2. The injection means 9 comprises again a tool 10 which is elongated in the flow direction 200 of the particle stream. Several nozzles are provided on the tool subsequently in the flow direction 200. Further a particle division means 20 is provided, which splits the particles, such that the injection of the modification substance 13 is facilitated to ensure that the particles 2 maintain their general shape while being transported past the injection means 9. An upper conveying means 21 is provided, which extends substantially parallel to the conveying means 3. After the conveying means 3 and 21, the particles 2 pass several rollers and are distributed by a dispersion means 4. From the dispersion means 4 the particles 2 fall in a dispersing section 5 onto a support 14 where they form a particle mass 15.

In Figure 5, a fourth embodiment of an apparatus according to the invention is shown. In this embodiment, the injection means 9 is arranged in the form of two tools 22, 23 downstream of the dispersion means 4. The tools 22, 23 are arranged at both sides of the stream of particles 2 falling in the particle dispersing section 5. The tools 22, 23 inject modification substance 30 from each of the sides into the particles 2, which fall in the flow direction 200. Thus, in this embodiment the highest concentration of the modification substance is obtained in the uppermost and lowermost layer of the particle mass, as can be seen in the diagram on the right side of Figure 5, where the highest concentration is provided at z=h1 and z=h2. Thus, two layers of modification substance 13 are provided in the particle mass 15, namely L1 and L2. This embodiment allows that, for example, the outside of a particle mass can be hardened. For this purpose the modification substance may be in particular additional adhesive or hardener.

By injecting the modification substance in an injection direction, which is inclined towards the flow direction 200 of the falling particles, and which is in particular perpendicular to the flow direction 200 of the falling particles, an improved mixing of the particles and modification substance 13 can be obtained, such that a gradient as shown in the diagram in Figure 5 regarding the concentration can be obtained. This improves the stability of the particle board formed from the particle mass 15 as shown in Figure 5.

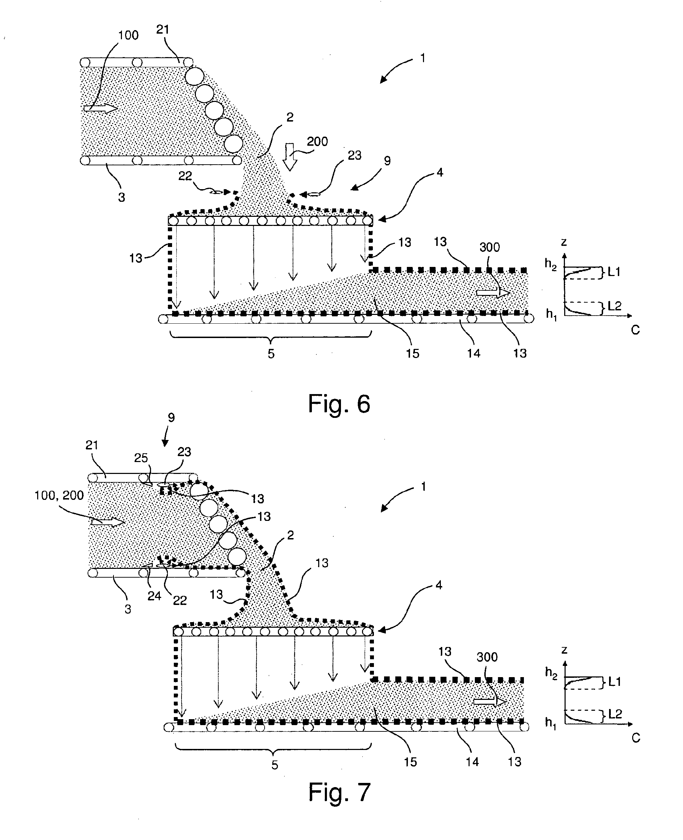

However, the injection of modification substance 13 to the sides of the falling particles can as well be implemented above the dispersing means 4, as shown in the fifth embodiment of the invention according to Figure 6. Here, the tools 22, 23 of the injection means 9 are arranged at both sides of the particles 2 which are flowing from the conveying means 3 to the dispersion means 4. Here, the modification substance 13 is provided to the outer side of the particle mass 15. Due to the fact that the modification substance is already injected before the particle mass is dispersed by the dispersion means 4, the injected substance is distributed better in the particles, as the particles are not yet compressed and further as a mixing of the particles by means of the dispersion means 4 occurs, which allows a better distribution of the modification substance 13 in the particle mass 15. The distribution of the modification substance 13 in the particle mass 15 is again shown in the diagram on the right side of Figure 6.

A sixth embodiment of the apparatus according to the invention is shown in Figure 7. In this embodiment, the injection means 9 is arranged next to the conveying means 3, 21 upstream of the dispersion means 4. The injection means 9 comprises a first tool 22 which is arranged next to the lower conveying means 3, and a second tool 23, which is arranged next to the upper conveying means 21. Generally, the tools 22, 23 are arranged adjacent to the sides of the particle stream upstream of the dispersion means 4. The tools 22, 23 may both have an elongated form in the conveying direction 100, respectively flow direction 200. Upstream of the tools 22, 23, a particle division means 24, 25 may be arranged, which divides the particles away from respective conveying means 3, 21. The tools each inject modification substance 13 substantially perpendicular to the conveying direction 100 respectively, flow direction 200. The modification substance remains substantially at the outer side of the stream of particles during the transport of the particles 2 to dispersion means 4 and the dispersion of the particles 2 in the dispersing section 5. Thus, the particles 2 form a particle mass 15 on the support 14, which has a higher concentration of the modification substance 13 in its outer layers L1 and L2, wherein the concentration gradually decreases towards the center of particle mass 15. This is shown in the diagram at the right side of the Figure 7.

Generally, the at least one tool of the injection means 9 may comprise several nozzles, which inject modification substance 13 in several directions, where the main injection direction is the average direction of the nozzles at each side of the tool.

The method according to the invention is illustrated by Figures relating to the apparatus according to the invention. Generally modification substance is injected by means of the injection means 9 in a direction which is inclined towards the flow direction of the particle stream at the injection location. The injection location is generally the location which is adjacent to the nozzles of the injection means or the intersection of the spray cone or wedge formed by the modification substance injected by the nozzles and the volume of the particles.

According to an embodiment of the invention, a particle based element is provided in which one or several layers of particles mixed with modification substance are arranged. The concentration of the modification substance may be as illustrated in the Figures above. However, in same embodiments there may as well be a gradient of modification substance over the whole height of the particle mass. Furthermore, there may be adjacent layers in the particle mass, wherein the modification substance is distributed according to the same gradient, i.e., having a concentration which gets higher or lower in the same direction. Furthermore, the injection means may only operate in predetermined intervals, such that only parts of the particle mass in the conveying direction are provided with modification substance. Further, several injection means may be provided at different locations of the particle stream, which may each be operated at predetermined intervals, such that specific shapes of the modification substance can be created in particle mass, in particular 3D-shapes, such as a wavelike pattern or zigzag pattern.

## Claims

1. Method for the production of a particle based element, in particular a particle board or fiber board, comprising:
- dispersing particles (2) in a dispersing section (5) to form a particle mass (15),
- providing a modification substance (13) modifying the properties of the particle mass (15), such that particles (2) with accordingly modified properties are arranged in at least one predetermined region of the particle mass (15),
**characterized in that**
the modification substance (13) is injected into the particles (2) before the particles (2) form the particle mass (15), wherein the modification substance (13) is injected into the particles (2) in an injection direction, which is inclined with respect to the flow direction (200) of the particle stream at the injection location.

2. Method according to claim 1, wherein the modification substance is injected in an injection direction substantially perpendicular to the flow direction (200) of the particle stream at the injection location.

3. Method according to claim 1 or 2, wherein the modification substance (13) is a treatment fluid, in particular water.

4. Method according to claim 1 or 2, wherein the modification substance (13) is adhesive.

5. Method according to any one of the previous claims, wherein the modification substance (13) is a further type of particles with different properties than the other particles (2) provided in the particle mass (15).

6. Method according to any one of the previous claims, wherein the modification substance (13) is injected while the particles (2) are falling from a dispersion means (4) onto a support (14).

7. Method according to claim 6, wherein the modification substance (13) is injected at least 20 mm into the falling particles (2) in the injection direction.

8. Method according to claim 6 or 7, wherein the modification substance (13) is injected from the side into the falling particles (2).

9. Method according to any one of claims 1 to 8, wherein the modification substance (13) is injected while the particles (2) are conveyed to a dispersion means (4) from which the particles fall onto a support.

10. Apparatus (1) for the production of a particle based element, in particular a particle board or fiber board, comprising:
a dispersion means (4) adapted to distribute particles (2) in a dispersing section (5),
a support (14) arranged below the dispersion means (4) such that a particle mass (15) is formed on the support (14) by particles (2) falling from the dispersion means (4) onto the support (14), and
an injection means (9) providing a modification substance (13) to the particles (2), wherein the injection means (9) is arranged above the upper edge of the particle mass (15) on the support (14),
**characterized in that**
the injection means (9) comprises a nozzle (11, 12) defining a main injection direction for the modification substance (13) to the particles (2), which is inclined with respect to the flow direction (200) of the particle stream at the injection location.

11. Apparatus according to claim 10, wherein the injection means (9) is arranged such that particles (2) pass at both sides of the injection means (9), and the injection means (9) comprises at least two nozzles (11, 12), provided at the opposite sides of the injection means (9), each injecting the modification substance (13) to the respective portions of the particles (2) passing the respective sides of the injection means (9).

12. Particle based element, manufactured by a method according to any one of claims 1 to 9, or by an apparatus according to claim 10 or 11.

13. Particle based element according to claim 12, wherein the modification substance (13) is provided in a layer (L) of the particle mass (15), which has a height of about 6% to 100% of the height of the particle mass (15).

14. Particle based element according to claim 12 or 13, wherein the concentration (C) of the modification substance (13) is distributed according to a continuous gradient in the layer (L).

15. Method for the production of a particle based element, in particular a particle board or fiber board, comprising:
- dispersing particles (2) in a dispersing section (5) to form a particle mass (15), and
- locally injecting a modification substance (13), such that particles (2) with accordingly modified properties are arranged in at least one predetermined region of the particle mass (15),
**characterized in that**
the modification substance (13) is adhesive and is injected before the particles (2) form the particle mass (15).
